# EUROPÄISCHE PATENTSCHRIFT

(11) **EP 0 956 919 B1**
(45) Veröffentlichungstag und Bekanntmachung des Hinweises auf die Patenterteilung: **14.11.2001**
(21) Anmeldenummer: 99105214.3
(22) Anmeldetag: 13.03.1999
(51) Int. Cl.: B23B 31/02, B23Q 11/10

(54) **Gewindeschneidfutter mit Minimalmengenschmierung**
Screw thread-cutting chuck with minimal lubrification
Mandrin de filetage avec lubrification minimale

(30) Priorität: 12.05.1998 DE 19821186
(43) Veröffentlichungstag der Anmeldung: 17.11.1999
(73) Patentinhaber: Emuge-Werk Richard Glimpel Fabrik für Präzisionswerkzeuge (vormals Moschkau & Glimpel), D-91207 Lauf (DE)
(72) Erfinder: Kazda, Thomas, 91235 Hartenstein (DE)
(74) Vertreter: Matschkur, Lindner Blaumeier Patent- und Rechtsanwälte

(56) Entgegenhaltungen:
- EP-A- 0 464 335
- DE-A- 4 218 237

## Beschreibung

Die vorliegende Erfindung bezieht sich auf ein Gewindeschneidfutter für Minimalmengenschmierung mit einem achszentralen Schmiermittelkanal zur Verbindung der Einsatzhülse für die, einen mit einer Längsbohrung versehenen Gewindebohrer aufnehmende, Spannzange, insbesondere einen Schnellwechseleinsatz mit einer maschinenseitigen Minimalschmierquelle, von der das Schmiermittel als Aerosol zur Längsbohrung des Gewindebohrers geführt wird, wobei der Schmiermittelkanal im Einmündungsbereich in die Einsatzhülse ein axial verschiebbares, einen direkten Anschluß an die Längsbohrung des Gewindebohrers herstellendes, Kühlmittelrohr umfaßt (siehe DE-A- 42 18 237).

Gewindeschneidfutter, bei denen ein Aerosol des fein in der Druckluft verteilten Kühl-Schmiermittels dazu dient, sowohl die Gewindeschneidstelle zu kühlen als auch den Gewindeschneidbohrer in der zu schneidenden Gewindebohrung zu schmieren, sind in vielfältigen Ausführungsformen auf dem Markt. Eine Schwierigkeit besteht dabei darin, daß mit einem solchen Gewindeschneidfutter Gewindebohrer unterschiedlicher Stärken verwendet werden müssen, die jeweils unterschiedlich weit nach innen ragen. Dadurch ergeben sich undefiniert große Kammern hinter dem Gewindebohrer, in denen durch Verwirbelung die Gefahr einer Entmischung des Aerosols von der transportierenden Druckluft besteht. Die wunschgemäß sehr fein verteilten Tröpfchen des Kühl-Schmiermittels können zu großen Tropfen sich zusammenballen und der Kühl- und der Schmiereffekt sind dann nicht mehr im gewünschten Maß gegeben.

Darüber hinaus ist aus der DE 42 18 237 A1 auch bereits ein Gewindeschneidfutter der eingangs beschriebenen Art bekanntgeworden, bei welchem durch Vorsehen eines Kühlmittelrohrs ein direkter Anschluß an die Längsbohrung des Gewindebohrers möglich ist, ohne daß zwischen dem Rohrende und dem Gewindebohrer noch eine Kammer gebildet sein muß. Der dichtende Anschluß erfolgt dabei über einen verschiebbaren Stutzen am Ende des Kühlmittelrohrs der federnd am Gewindebohrer anliegen kann. Diese bekannte Anordnung ist aber für eine Aerosol-Schmierung nicht geeignet, da zum einen das Kühlmittelrohr am inneren Ende in eine Kammer einragt, in der unweigerlich ein Entmischen des Aerosols stattfinden würde und umgekehrt auch am Stutzen wegen der unterschiedlichen sich erweiternden Durchmesser eine solche Entmischung zu befürchten wäre. Hinzu kommt noch, daß diese Art der Abdichtung des Kühlmittels am Ende des Gewindebohrers nur für eine bestimmte axiale Position des Gewindebohrers geeignet ist, nicht aber für Gewindeschneidfutter mit auswechselbaren Schnellwechseleinsätzen, bei denen die Stirnfläche des Gewindebohrers bei unterschiedlichen Bohrerstärken axial in sehr unterschiedlichen Stellungen positioniert ist. Die leichte Andruckfederung bei der DE 42 18 237 A1 ist zum Auffangen solcher axialer Positionsverschiebungen des Endes des Gewindebohrers weder gedacht noch geeignet.

Der Erfindung liegt daher die Aufgabe zugrunde, ein Gewindeschneidfutter der eingangs genannten Art so auszugestalten, daß es bei Verwendung unterschiedlicher Schnellwechseleinsätze mit axial unterschiedlicher Positionierung der Gewindebohrerenden Verwirbelungen mit der Gefahr einer Entmischung des Aerosols sicher verhindert.

Zur Lösung dieser Aufgabe ist erfindungsgemäß vorgesehen, daß das Kühlmittelrohr einteilig durchgehend vom Gewindebohrer bis zum Schmiermittelzuführkanal des Futterschaftes verlaufend in der Einsatzhülse der Spannzange, insbesondere des Schnellwechseleinsatzes, verschiebbar gelagert ist, und daß das Kühlmittelrohr durch den auf seine innere Stirnfläche einwirkenden Druck des Aerosols unabhängig von der Axialposition des Gewindebohrers in seine Eingriffsstellung in die Längsbohrung des Gewindebohrers gedrückt wird.

In manchen Fällen - insbesondere wenn das Kühlmittelrohr nur eine sehr geringe Wandstärke aufweist, wie sie für den eigentlichen verwirbelungsfreien Transport an sich ausreichend wäre - ist die über die geringe Stirnfläche des Kühlmittelrohrs aufbringbare Vorschubkraft so gering, daß sie noch nicht einmal die inneren Reibungen sicher überwinden kann. Aus diesem Grund hat es sich als zweckmäßig erwiesen, das Kühlmittelrohr durch eine Feder nach außen vorzuspannen.

Als besonders einfach und vorteilhaft hat sich dabei eine Ausgestaltung herausgestellt, bei der eine das Kühlmittelrohr umgebende Wendeldruckfeder sich einerseits an einer hinteren Führungslagerbuchse und zum anderen an einer am kühlmittelrohr befestigten Ringscheibe abstützt.

Diese Konstruktion hat dabei noch den zusätzlichen Vorteil, daß die Ringscheibe zusammen mit einer vorderen Führungslagerbuchse eine Auszugsbegrenzung für das Kühlmittelrohr bildet. Das Kühlmittelrohr wird bei nicht eingesetztem Schnellwechselfutter mit einem Gewindebohrer nach vorne in seine maximale Auszugsstellung durch die Feder gedrückt. Beim Einsetzen des Schnellwechseleinsatzes mit einem Gewindebohrer wird das Kühlmittelrohr je nach der Axialposition des Gewindebohrers mehr oder weniger weit nach innen gedrückt, hält aber stets direkte Verbindung zur Längsbohrung des Gewindebohrers und vermeidet auf diese Art und Weise Verwirbelungen des Kühl-Schmiermittels mit der Folge einer Entmischung in der Kammer hinter dem Gewindebohrer.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: einen Schnitt durch ein erfindungsgemäßes Schnellwechselfutter mit einem Gewindebohrer kleinen Durchmessers, und
- Fig. 2: einen Schnitt durch das gleiche Gewindeschneidfutter wie in Fig. 1 mit einem größeren, axial weiter nach hinten reichenden Gewindebohrer.

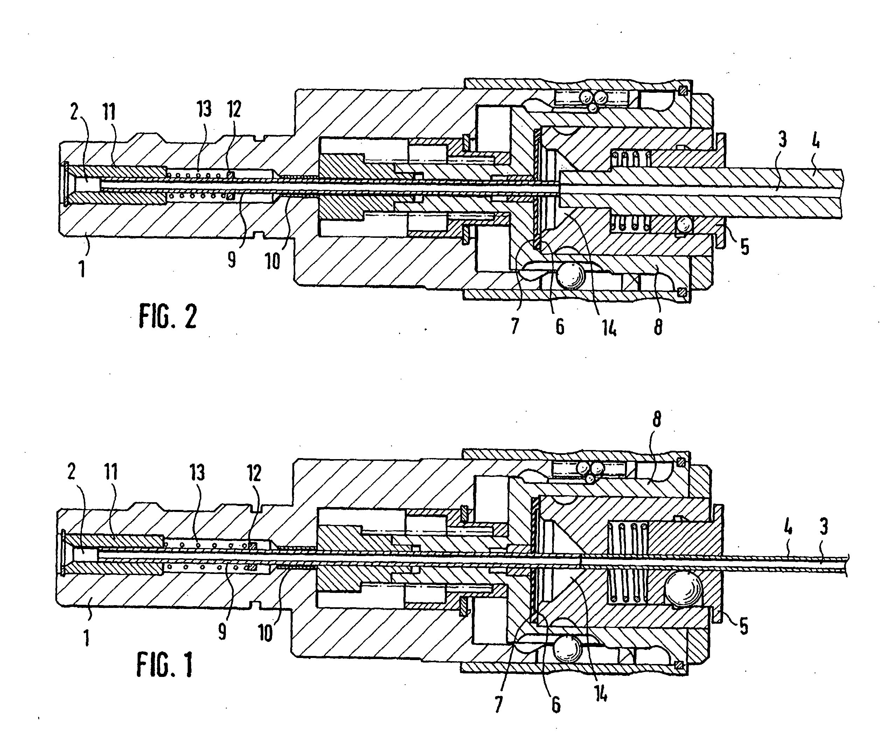

Im Futterschaft 1 ist ein zum Anschluß an eine nicht dargestellte maschinenseitige Minimalschmierquelle dienender Kühl-Schmiermittelkanal 2 ausgebildet, der eine Verbindung der Minimalschmierquelle mit der Längsbohrung 3 eines Gewindebohrers 4 herstellen soll, wobei der Gewindebohrer in einem Schnellwechseleinsatz 5 eingespannt ist. Dieser Schnellwechseleinsatz 5 liegt mit seiner inneren Stirnkante 6 an einem Dichtring 7 der Einsatzhülse 8 für den Schnellwechseleinsatz 5 an. Im Kühl-Schmiermittelkanal 2 ist ein dünnwandiges Kühlmittelrohr 9 axial längs verschiebbar gelagert. Hierzu ist der Kühl-Schmiermittelkanal 2 teilweise mit Verengungen oder Einsätzen versehen, die das Kühlmittelrohr eng umgebende Führungslagerbuchsen bilden. So ist beispielsweise eine vordere Führungslagerbuchse 10 und eine durch einen Einsatz gebildete hintere Führungslagerbuchse 11 vorgesehen. Auf dem Kühlmittelrohr 9 ist zwischen den beiden Führungslagerbuchsen 10 und 11 eine Ringscheibe 12 befestigt, an der sich das vordere Ende einer Wendeldruckfeder 13 abstützt, deren hinteres Ende sich an der hinteren Führungslagerbüchse 11 abstützt. Durch diese Wendeldruckfeder 13 wird das Kühlmittelrohr nach vorne gedrückt, so daß es in einem mehr oder weniger dichtenden Eingriff mit der Längsbohrung 3 des Gewindebohrers steht, und zwar unabhängig davon, welche axiale Position das hintere Ende des Gewindebohrers einnimmt. Sowohl im Falle eines dünnen Gewindebohrers gemäß Fig. 1, der weiter vorne endet als der in Fig. 2 gezeigte dicke Gewindebohrer, ist eine durchgehende Rohrverbindung vom hinteren Ende des Futterschaftes und damit dem dort ansetzenden Verbindungsrohr zur Minimalschmierquelle bis zur Gewindebohrung 3 des Gewindebohrers 4 hergestellt. Es können also nicht im mehr oder weniger großen Raum 14 hinter dem inneren Stirnwende des Gewindebohrers Verwirbelungen mit der Folge einer Entmischung des Aerosols auftreten, sondern das Aerosol wird in feiner Emulsion von der Minimalschmierquelle bis zum vorderen Ende des Gewindebohrers geführt. Die Ringscheibe 12 dient dabei in Verbindung mit der vorderen Führungslagerbuchse 10 als Auszugsbegrenzung für das Kühlmittelrohr 9. Ist kein Schnellwechseleinsatz in den Futterschaft eingesteckt, so befindet sich das Kühlmittelrohr in seiner weitest nach außen verschobenen Stellung, in der die Ringscheibe 12 an der Führungslagerbuchse 10 anliegt. Wird ein Schneliwechseleinsatz mit einem Gewindebohrer egal welchen Durchmessers eingesetzt, so schiebt das innere Ende des Gewindebohrers das Kühlmittelrohr entsprechend weit nach hinten, also entweder in die Stellung gemäß Fig. 1 oder die nach Fig. 2 oder irgendeine Zwischenposition.

## Patentansprüche

1. Gewindeschneidfutter für Minimalmengenschmierung mit einem achszentralen Schmiermittelkanal (2) zur Verbindung der Einsatzhülse (8) für die, einen mit einer Längsbohrung (3) versehenen Gewindebohrer (4) aufnehmende, Spannzange, insbesondere einen Schnellwechseleinsatz (5), mit einer maschinenseitigen Minimalschmierquelle, von der das Schmiermittel als Aerosol zur Längsbohrung (3) des Gewindebohrers (4) geführt wird, wobei der Schmiermittelkanal (2) im Einmündungsbereich in die Einsatzhülse (8) ein axial verschiebbares, einen direkten Anschluß an die Längsbohrung des Gewindebohrers herstellendes, Kühlmittelrohr (9) umfaßt, **dadurch gekennzeichnet, daß** das Kühlmittelrohr (9) einteilig durchgehend vom Gewindebohrer (4) bis zum Schmiermittelzuführkanal (2) des Futterschaftes (1) verlaufend in der Einsatzhülse (8) der Spannzange, insbesondere des Schnellwechseleinsatzes (5), verschiebbar gelagert ist, und daß das Kühlmittelrohr (9) durch den auf seine innere Stirnfläche einwirkenden Druck des Aerosols unabhängig von der Axialposition des Gewindebohrers in seine Eingriffsstellung in die Längsbohrung (3) des Gewindebohrers (4) gedrückt wird.

2. Gewindeschneidfutter nach Anspruch 1, **dadurch gekennzeichnet, daß** das Kühlmittelrohr (9) durch eine Feder nach außen vorgespannt ist.

3. Gewindeschneidfutter nach Anspruch 2, **dadurch gekennzeichnet, daß** eine das Kühlmittelrohr (9) umgebende Wendeldruckfeder (13) sich an einer hinteren Führungslagerbuchse (11) und einer am Kühlmittelrohr (9) befestigten Ringscheibe (12) abstützt.

4. Gewindeschneidfutter nach Anspruch 3, **dadurch gekennzeichnet, daß** die Ringscheibe (12) zusammen mit einer vorderen Führungslagerbuchse (10) eine Auszugsbegrenzung für das Kühlmittelrohr (9) bildet.

## Claims

1. Thread-cutting chuck for minimal lubrication, having an axially central lubricant channel (2) for connecting the insertion bush (8) for the collet, which receives a thread drill (4) provided with a longitudinal bore (3), in particular a quick-change insert (5), having a machine-side minimal lubrication source, from which the lubricant is guided as an aerosol to the longitudinal bore (3) in the thread drill (4), wherein the lubricant channel (2) comprises in the opening region into the insertion bush (8) an axially displaceable coolant tube (9) which produces a direct connection to the longitudinal bore of the thread drill, **characterised in that** the coolant tube (9) is slidably mounted in one part continuously from the thread drill (4) to the lubricant supply channel (2) of the chuck shank (I ) extending in the insertion bush (8) of the collet, and **in that** the coolant tube (9) is pressed by the pressure of the aerosol acting on its inner end face independently from the axial position of the thread drill into its engagement position in the longitudinal bore (3) of the thread drill (4).

2. Thread-cutting chuck according to claim 1, **characterised in that** the coolant tube (9) is biased towards the outside by a spring.

3. Thread-cutting chuck according to claim 2, **characterised in that** a helical pressure spring (13) surrounding the coolant tube (9) bears on a rear guide bearing bush (11) and an annular disc (12) fixed to the coolant tube (9).

4. Thread-cutting chuck according to claim 3, **characterised in that** the annular disc (12) forms together with a front guide bearing bush (10) an extension limit for the coolant tube (9).

## Revendications

1. Mandrin de filetage pour lubrification minimale, comportant un canal central axial (2) pour un lubrifiant, servant à relier la douille d'insertion (8) pour la mâchoire de serrage, notamment un insert de changement rapide (5), qui reçoit un taraud (4) pourvu d'un perçage longitudinal (3), à une source de lubrification minimale située côté machine et à partir de laquelle le lubrifiant est envoyé sous la forme d'un aérosol au perçage longitudinal (3) du taraud (4), et le canal (2) pour le lubrifiant comprenant, dans la zone où il débouche dans la douille d'insertion (8), un tube (9) pour un fluide de refroidissement, qui est déplaçable axialement et établit un raccordement direct avec le perçage longitudinal du taraud, **caractérisé en ce que** le tube (9) pour le fluide de refroidissement est monté coulissant, en s'étendant d'un seul tenant en continu depuis le taraud (4) jusqu'au canal (2) d'amenée du lubrifiant de la tige (1) du mandrin, dans la douille d'insertion (8) de la mâchoire de serrage, notamment de l'insert de changement rapide (5), et **en ce que** le tube (9) pour le fluide de refroidissement est repoussé par la pression de l'aérosol, qui agit sur sa surface frontale intérieure, indépendamment de la position axiale du taraud, dans sa position d'engagement dans le perçage longitudinal (3) du taraud (4).

2. Mandrin de filetage selon la revendication 1, **caractérisé en ce que** le tube (9) pour le fluide de refroidissement est précontraint vers l'extérieur par un ressort.

3. Mandrin de filetage selon la revendication 2, **caractérisé en ce qu'**un ressort hélicoï dal de pression (13), qui entoure le tube (9) pour le fluide de refroidissement, prend appui sur une douille arrière de support de guidage (11) et sur une rondelle annulaire (12) qui est fixée sur le tube (9) pour le fluide de refroidissement.

4. Mandrin de filetage selon la revendication 3, **caractérisé en ce que** la rondelle annulaire (12) forme, conjointement avec une douille avant de support de guidage (10), une limite pour l'extraction du tube (9) pour le fluide de refroidissement.
